# EUROPÄISCHE PATENTSCHRIFT

(11) **EP 0 625 654 B1**
(45) Veröffentlichungstag und Bekanntmachung des Hinweises auf die Patenterteilung: **02.01.1997**
(21) Anmeldenummer: 94105828.1
(22) Anmeldetag: 15.04.1994
(51) Int. Cl.: F16H 25/16

(54) **Getriebeanordnung**
Transmission assembly
Assemblage de transmission

(30) Priorität: 18.05.1993 DE 4316599
(43) Veröffentlichungstag der Anmeldung: 23.11.1994
(73) Patentinhaber: Heidelberger Druckmaschinen Aktiengesellschaft, D-69115 Heidelberg (DE)
(72) Erfinder: Döpke, Stefan, D-69214 Eppelheim (DE)
(74) Vertreter: Stoltenberg, Heinz-Herbert Baldo

(56) Entgegenhaltungen:
- DD-A- 227 629
- FR-A- 2 636 394
- US-A- 2 908 186
- VOLMER 'Kurvengetriebe' 1989 , HüTHIG , HEIDELBERG * Seite 138, Absatz 7.4.1 - Seite 141 * * Seite 170, Absatz 9.3 - Seite 171 *

## Beschreibung

Die Erfindung betrifft eine Getriebeanordnung mit den Merkmalen des Oberbegriffs von Anspruch 1.

Eine derartige Getriebeanordnung ist beispielsweise aus der Druckschrift DE 38 30 946 C2 bekannt und wird entsprechend den dortigen Ausführungen zum periodischen Schwenken eines Vorgreifers einer Bogenrotationsdruckmaschine verwendet. Insbesondere bei dieser Verwendung machen sich fertigungsbedingte Abweichungen von der theoretischen Idealform einzelner Bestandteile einer gattungsgemäßen Getriebeanordnung im praktischen Einsatz äußerst nachteilig bemerkbar, und zwar in Form von Passerabweichungen merklicher Größenordnung.

Der weitere Stand der Technik gibt keinen Hinweis in Richtung der Relation der kontaktpunkte auf der Steuerkurve zu dem kontaktpunkt auf der Tastrolle. Mit der Erfindung sollen durch Ungenauigkeiten bei der Fertigung einzelner Bestandteile einer gattungsgemäßen Getriebeanordnung bedingte Übersetzungsfehler dieser Getriebeanordnung reduziert werden. Zur Lösung dieser Aufgabe sind die im Anspruch 1 aufgeführten Merkmale vorgesehen. Dabei hebt der zugrundeliegende Erfindungsgedanke ab auf die Reproduzierbarkeit jener geometrischen Verhältnisse in der zweiten Funktionsstellung des zweiten Getriebeglieds, wie sie in dessen erster Funktionsstellung vorliegen.

Bei entsprechender Ausbildung der Steuerkurve eignet sich eine erfindungsgemäße Getriebeanordnung in besonderer Weise zum Antrieb eines Vorgreifers einer Bogenrotationsdruckmaschine, da sich mit einer solchen Getriebeanordnung Passerfehler bei der Überführung eines Bogens aus einer an Vordermarken ausgerichteten ersten Lage in eine auf einer Anlegetrommel gelegene zweite Lage gegenüber herkömmlichen Vorgreifereinrichtungen erheblich reduzieren lassen. Vorteilhafterweise gelingt die Reduzierung der genannten Passerfehler, ohne daß übersteigerte Anforderungen an die Genauigkeit der einzelnen Bestandteile der Getriebeanordnung erfüllt werden müssen. Hierzu ist eine erfindungsgemäße Getriebeanordnung lediglich so auszulegen, daß der Vorgreifer in der ersten Funktionsstellung des zweiten Getriebeglieds den an den Vordermarken ausgerichteten Bogen übernimmt und in der zweiten Funktionsstellung des zweiten Getriebeglieds an die Anlegetrommel übergibt. Die Reduzierung der Passerfehler ergibt sich hierbei im Falle eines in der Praxis vielfach gegebenen Radialschlags der Tastrolle bei Vernachlässigung weiterer nachteiliger Einflüsse auf das Übersetzungsverhältnis einer gattungsgemäßen Getriebeanordnung dadurch, daß bei einem Zusammenfallen des zweiten Kontaktpunkts in der zweiten Funktionsstellung mit jenem Punkt auf der Lauffläche der Tastrolle, der in der ersten Funktionsstellung mit dem ersten Kontaktpunkt zusammenfällt, der vom zweiten Getriebeglied bei dessen Verlagerung von der ersten in die zweite Funktionsstellung zurückgelegte Weg trotz gegebenenfalls von Periode zu Periode voneinander abweichender räumlicher Lagen des zweiten Getriebeglieds bezüglich einer jeweiligen Sollstellung in der ersten und zweiten funktionsstellung konstant ist. Demgegenüber wirkt sich bei herkömmlichen gattungsgemäßen Getriebeanordnungen ein Radialschlag der Tastrolle während einer Abfolge einer hinlänglichen Anzahl von Perioden in einer Schwankung des genannten Weges um einen theoretischen Mittelwert mit einer Amplitude aus, die sich als doppeltes Produkt des Maßes des Radialschlags und eines in der Umgebung der beiden Funktionsstellungen vereinfachend als gleich unterstellten Übersetzungsverhältnisses der Getriebeanordnung ergibt.

Mit der erfindungsgemäßen Ausgestaltung einer gattungsgemäßen Getriebeanordnung wird somit eine erhebliche Steigerung von deren Präzision erzielt, deren Ausmaß aus der obigen Gegenüberstellung deutlich wird, wonach bei Verwendung einer erfindungsgemäßen Getriebeanordnung für eine Vorgreifereinrichtung die bei herkömmlichen Einrichtungen infolge eines Radialschlags der Tastrolle auftretenden Passerabweichungen nahezu völlig unterdrückt werden.

In Weiterführung des Erfindungsgedankens ist eine erfindungsgemäße Getriebeanordnung derart ausgestaltet, daß die Tastrolle eine Habe, auf der Habe abrollende Wälzkörper und einen von den Wälzkörpern getragenen Laufring mit einem derartigen Verhältnis des Durchmessers der Wälzkörper zum Durchmesser der Nabe aufweist, daß die Wälzkörper in der zweiten Funktionsstellung zumindest im wesentlichen dieselbe Relativlage gegenüber dem Laufring einnehmen wie in der ersten Funktionsstellung. Hiermit lassen sich weiterhin Auswirkungen auf den genannten Weg des zweiten Getriebeglieds bei dessen Verlagerung von der ersten in die zweite Funktionsstellung unterdrücken, die zurückzuführen sind auf Maßabweichungen von Wälzkörpern, die zur Lagerung eines Laufrings der Tastrolle vorgesehen sind.

In weiterer Ausgestaltung einer erfindungsgemäßen Getriebeanordnung ist vorgesehen, daß das zweite Getriebeglied eine Antriebsschwinge eines Übertragungsgetriebes mit einer Abtriebsschwinge ist und zwischen einer ersten Auslenkung eines bezüglich des zweiten Getriebeglieds festen ersten Systempunkts und einer zweiten Auslenkung eines bezüglich der Abtriebsschwinge festen zweiten Systempunkts in der ersten und zweiten Funktionsstellung derart unterschiedliche Übersetzungsverhältnisse vorgesehen sind, daß diese einem Einfluß auf die beiden Funktionsstellungen entgegenwirken, der sich bei einem Radialschlag der Tastrolle aus unterschiedlichen zwischen der Steuerkurve und dem zweiten Getriebeglied wirksamen Übertragungswinkeln ergibt. Diese Ausgestaltung berücksichtigt die Tatsache, daß der weiter oben bereits genannte, von der ersten in die zweite Funktionsstellung zurückgelegte Weg des zweiten Getriebeglieds einer erfindungsgemäßen Getriebeanordnung im Falle einer mit einem Radialschlag behafteten Tastrolle selbst dann noch gewissen Schwankungen unterliegt, wenn ein in der ersten Funktionsstellung des zweiten Getriebeglieds mit dem ersten Kontaktpunkt zusammenfallender Punkt der Lauffläche der Tastrolle in der zweiten Funktionsstellung des zweiten Getriebeglieds mit dem zweiten Kontaktpunkt zusammenfällt.

Für den speziellen Anwendungsfall des Antriebs eines Vorgreifers mit einer erfindungsgemäßen Getriebeanordnung ist in weiterer Ausgestaltung vorgesehen, daß wenigstens einer der beiden Kontaktpunkte, die einer jeweiligen der beiden Funktionsstellungen entsprechen, auf einem eine Rastbahn darstellenden Kurvenabschnitt der Steuerkurve liegt. Hierbei ist als der wenigstens eine der beiden Kontaktpunkte jener vorgesehen, welcher der ersten Funktionsstellung des zweiten Getriebeglieds entspricht. In dieser ersten Funktionsstellung steht somit das zweite Getriebeglied still, so daß ein im genannten Anwendungsfall mit dem zweiten Getriebeglied verbundenes Greifersystem des genannten Vorgreifers einen an Vordermarken ausgerichteten stillstehenden Bogen erfassen kann.

Die Erfindung ist nachfolgend unter Bezugnahme auf die beigefügten Zeichnungen näher erläutert. Hierin zeigen
- Fig. 1: eine schematische Darstellung einer erfindungsgemäßen Getriebeanordnung in zwei Funktionsstellungen und eine mit der Getriebeanordnung zusammenarbeitende Einrichtung,
- Fig. 2: eine idealisierte qualitative Darstellung der Verlagerung des zweiten Getriebeglieds aufgrund von Auslenkungen der am zweiten Getriebeglied gelagerten Tastrolle infolge einer Relativbewegung zwischen der Steuerkurve und der Tastrolle,
- Fig. 3: ein Beispiel einer mit Wälzkörpern ausgestatteten Tastrolle mit einer Angabe der von der Erfindung betroffenen Abmessungen,
- Fig. 4: eine Darstellung des Einflusses eines zwischen einer Steuerkurve und einem davon gesteuerten Rollenhebel wirksamen Übertragungswinkels,
- Fig. 5: eine qualitative Darstellung einer erfindungsgemäßen Getriebeanordnung, bei welcher ein von einer Steuerkurve gesteuerter Rollenhebel als Antriebsschwinge eines Übertragungsgetriebes ausgebildet ist.

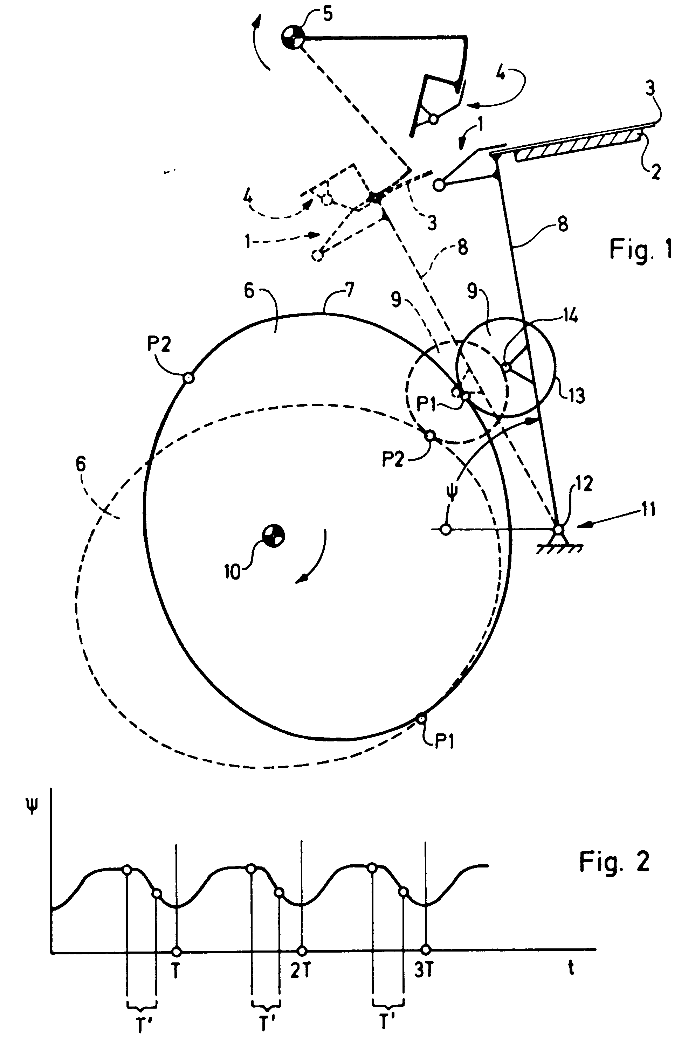

In Figur 1 ist in schematischer Darstellung eine erfindungsgemäße Getriebeanordnung in ihrer Verwendung für einen speziellen Anwendungsfall wiedergegeben, in welchem ein Vorgreifersystem 1 an einer nicht dargestellten Bogenrotationsdruckmaschine einen auf einem Anlegetisch 2 vorübergehend ruhenden Bogen 3 im Bereich einer Vorderkante desselben erfaßt und an ein rotierendes Greifersystem 4 übergibt, dessen Rotation in Figur 1 mittels des einer Rotationsachse 5 zugeordneten Pfeils angedeutet ist. Dabei sind die Getriebeanordnung und das damit zusammenarbeitende Greifersystem 4 in einer ersten Lage der die Getriebeanordnung bildenden Getriebeglieder mit Vollinien und in einer zweiten Lage mit gestrichelten Linien dargestellt.

Entsprechend der Darstellung in Figur 1 umfaßt eine erfindungsgemäße Getriebeanordnung ein erstes Getriebeglied 6 mit einer daran ausgebildeten Steuerkurve 7 und ein zweites Getriebeglied 8 mit einer daran drehbar gelagerten, ein drittes Getriebeglied darstellenden Tastrolle 9. Im dargestellten Beispiel ist das erste Getriebeglied 6 als Kurvenscheibe ausgebildet, welche mit betriebsmäßig konstanter Drehzahl um eine Getriebeachse 10 im Sinne des dieser in Figur 1 zugeordneten Pfeils umläuft. Über nicht dargestellte Zwangsführungsmittel ist dabei ein betriebsmäßiger Rollkontakt zwischen der Tastrolle 9 und der Steuerkurve 7 hergestellt. Ein Beispiel für entsprechende Zwangsführungsmittel kann der eingangs erwähnten Druckschrift DE 38 30 946 C2 entnommen werden. Infolge des Umlaufens des als Kurvenscheibe ausgebildeten ersten Getriebeglieds 6 und des Rollkontakts zwischen der somit umlaufenden Steuerkurve 7 und der Tastrolle 9 ergibt sich eine Relativbewegung zwischen der Steuerkurve 7 einerseits und der Tastrolle 9 andererseits.

Das zweite Getriebeglied 8 ist im dargestellten Beispiel als Schwenkarm ausgebildet. Dementsprechend ist eine das zweite Getriebeglied 8 aufnehmende Lagerung 11 als Schwenklager mit einer Schwenkachse 12 ausgebildet, so daß das zweite Getriebeglied 8 in Form des genannten Schwenkarms für eine Verlagerung des zweiten Getriebeglieds 8 aufgrund von Auslenkungen der am zweiten Getriebeglied 8 gelagerten Tastrolle 9 infolge der Relativbewegung zwischen der Steuerkurve 7 einerseits und der Tastrolle 9 andererseits gegenüber der Lagerung 11 einen Freiheitsgrad der Schwenkung um die Schwenkachse 12 besitzt.

Das als Schwenkarm augebildete zweite Getriebeglied 8 führt infolge des betriebsmäßigen Rollkontakts zwischen der Tastrolle 9 und der Steuerkurve 7 bei jeder Umdrehung des als Kurvenscheibe ausgebildeten ersten Getriebeglieds 6 eine oszillierende Bewegung aus, die sich nach Ablauf einer Periode im Verlauf einer jeweils weiteren Periode wiederholt. Dabei erstreckt sich eine jeweilige Periode über die Periodendauer T einer jeweiligen Umdrehung des ersten Getriebeglieds 6 (siehe Figur 2).

Zur Erlangung des mit der Erfindung erreichten Ziels ist es nicht notwendigerweise erforderlich, daß die Steuerkurve 7 in sich geschlossen ist. Sie muß lediglich so beschaffen sein, daß auf der Kontur der Steuerkurve 7 ein erster und ein zweiter Kontaktpunkt P1 und P2 (siehe Figur 1) derart liegt, daß das zweite Getriebeglied 8 jeweils in einer ersten beziehungsweise zweiten Funktionsstellung steht, wenn die Tastrolle 9 den ersten beziehungsweise den zweiten Kontaktpunkt P1 beziehungsweise P2 erreicht. Ebenso ist ein betriebsmäßiger Rollkontakt zwischen der Tastrolle 9 und der Steuerkurve 7 auch nur vom ersten Kontaktpunkt P1 bis zum zweiten Kontaktpunkt P2 und zweckmäßigerweise in einer beidseitigen Umgebung derselben erforderlich, so daß der genannte betriebsmäßige Rollkontakt auf einen jeweiligen Periodenabschnitt T' innerhalb einer jeweiligen Periode beschränkt bleiben kann, wobei die Tastrolle 9 innerhalb eines solchen Perlodenabschnitts T' zunächst den ersten Kontaktpunkt P1 und sodann den zweiten Kontaktpunkt P2 erreicht. Die Steuerkurve 7 einerseits und die Tastrolle 9 andererseits sind gemäß der Erfindung so aufeinander abgestimmt, daß die Länge eines zwischen den beiden Kontaktpunkten P1 und P2 gelegenen Kurvenabschnitts der Steuerkurve 7 einerseits und die Länge des Umfangs der Laufläche 13 der Tastrolle 9 andererseits im Idealfall ein genau ganzzahliges Verhältnis aufweisen. Somit fällt ein in der ersten Funktionsstellung des zweiten Getriebegliedes mit dem ersten Kontaktpunkt P1 zusammenfallender Punkt der Lauffläche 13 der Tastrolle 9 in der zweiten Funktionsstellung des zweiten Getriebeglieds 8 zumindest im wesentlichen mit dem zweiten Kontaktpunkt P2 zusammen.

Unter Vernachlässigung sonstiger Einflüsse auf das Übersetzungsverhältnis einer solchermaßen ausgebildeten Getriebeanordnung werden damit Übersetzungsfehler korrigiert, die davon herrühren, daß in der Praxis die Lauffläche 13 der Tastrolle 9 nicht geometrisch exakt konzentrisch zu einem in Figur 1 mit 14 bezeichneten Drehzentrum der Tastrolle 9 ist.

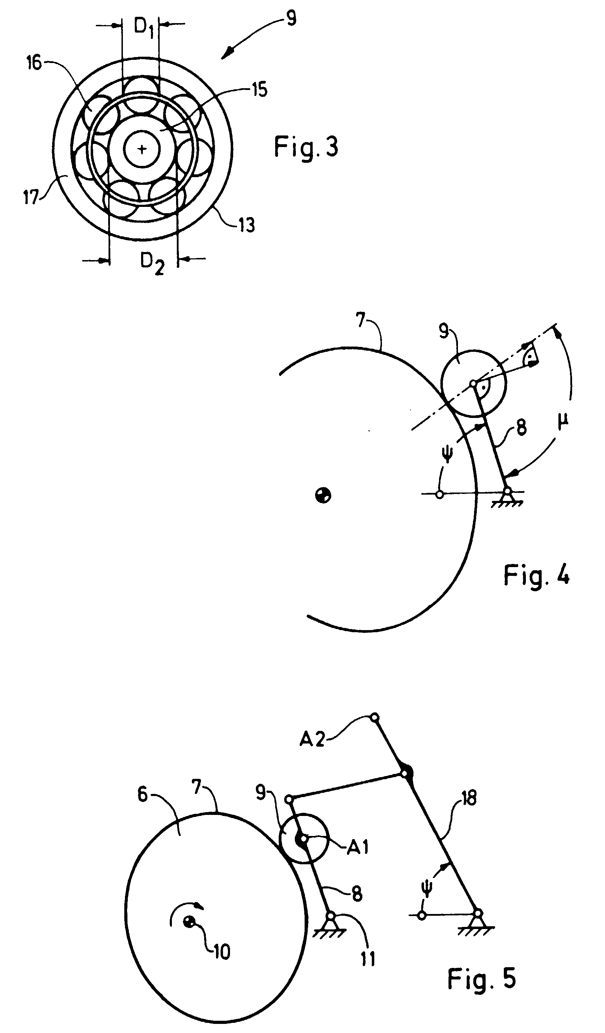

In Weiterführung des eingangs genannten Erfindungsgedankens ist die Tastrolle 9 entsprechend der vereinfachten Darstellung von Figur 3 ausgebildet und umfaßt eine Nabe 15, auf der Nabe 15 abrollende Wälzkörper 16 und einen von den Wälzkörpern 16 getragenen Laufring 17, wobei ein derartiges Verhältnis des Durchmessers D1 der Wälzkörper 16 zum Durchmesser D2 der Nabe 15 vorgesehen ist, daß die Wälzkörper 16 in der zweiten Funktionsstellung zumindest im wesentlichen dieselbe Relativlage gegenüber dem Laufring 17 einnehmen wie in der ersten Funktionsstellung. Hiernach kann in dem Sonderfall gleicher Übertragungswlnkel µ in beiden Funktionsstellungen der Durchmesser D2 der Nabe 15 gerade doppelt so groß wie der Durchmesser D1 der Wälzkörper 16 sowie der zwischen den Kontaktpunkten P1 und P2 gelegene Kurvenabschnitt der Steuerkurve 7 gerade dreimal so lang wie der Umfang der Lauffläche 13 der Tastrolle 9 gewählt werden, so daß bei einer Verlagerung des zweiten Getriebeglieds 8 von dessen erster in dessen zweite Funktionsstellung der Laufring 17 der mit den Wälzkörpern 16 ausgestatteten Tastrolle 9 gerade drei Umdrehungen ausführt, während die Wälzkörper 16 gerade zwei Umläufe um die Nabe 15 ausführen.

Bei erfindungsgemäßer Auslegung der genannten Durchmesser D1 und D2 wird von den oben angedeuteten Einflüssen auf das Übersetzungsverhältnis einer gattungsgemäßen Gebtriebeanordnung jener berücksichtigt, der davon herrührt, daß bei einer Tastrolle 9 mit einem von Wälzkörpern 16 getragenen Laufring 17 zusätzlich zu einer eventuellen Exzentrizität der Lauffläche 13 gegenüber dem Innendurchmesser des Laufrings 17 Maßabweichungen der Wälzkörper 16 vorliegen.

Ein weiterer der oben angedeuteten nachteiligen Einflüsse auf das Übersetzungsverhältnis einer infolge Fertigungsungenauigkeiten von der idealen Geometrie abweichenden gattungsgemäßen Getriebeanordnung ergibt sich daraus, daß insbesondere in den beiden Funktionsstellungen unterschiedliche Übertragungswinkel µ zwischen der Steuerkurve 7 und dem zweiten Getriebeglied 8 vorliegen können. Gemäß einer in Figur 5 qualitativ dargestellten Weiterbildung der Erfindung ist zur Unterdrückung dieses Einflusses vorgesehen, daß das zweite Getriebeglied 8 eine Antriebsschwinge eines Übertragungsgetriebes mit einer Abtriebsschwinge 18 ist, wobei als Übertragungsgetriebe ein Koppelgetriebe gewählt ist und weiterhin eine besondere Maßnahme mit Blick auf eine erste Auslenkung eines bezüglich des ersten Getriebeglieds 6 festen ersten Systempunkts A1 und auf eine zweite Auslenkung eines bezüglich der Abtriebsschwinge 18 festen zweiten Systempunkts A2 in der ersten und zweiten Funktionsstellung getroffen ist. Die genannte Maßnahme betrifft die Übersetzungsverhältnisse zwischen der ersten und der zweiten Auslenkung. Diese Übersetzungsverhältnisse sind für die erste und die zweite Funktionsstellung so gewählt, daß sie einem Einfluß auf die beiden Funktionsstellungen entgegenwirken, der sich bei einem Radialschlag der Tastrolle 9 aus unterschiedlichen zwischen der Steuerkurve 7 und dem zweiten Getriebeglied 8 wirksamen Übertragungswinkel µ ergibt. Hierzu können - ausgehend von den durch unterschiedliche Übertragungswinkel µ in den beiden Funktionsstellungen auftretenden Differenzen der jeweils ersten Auslenkungen - die Parameter der auf das zweite Getriebeglied 8 folgenden Getriebeglieder des Koppelgetriebes iterativ bestimmt werden.

Mit Blick auf den speziellen Anwendungsfall einer solchermaßen ausgebildeten Getriebeanordnung zum Antrieb eines Vorgreifers ist der zweite Systempunkt A2 so bestimmt, daß er auf einer Greiferauflage des Vorgreifers liegt.

Ebenfalls mit Blick auf den genannten speziellen Anwendungsfall ist die Steuerkurve 7 so ausgebildet, daß sie in einer gewissen Umgebung des ersten Kontaktpunkts P1 einen mit der Getriebeachse 10 zusammenfallenden Krümmungsmittelpunkt besitzt. Damit liegt einer der beiden Kontaktpunkte P1 und P2, die einer der beiden Funktionsstellungen entsprechen, auf einem eine Rastbahn darstellenden Kurvenabschnitt der Steuerkurve 7.

Für ein Zusammenwirken einer zum Antrieb eines Vorgreifers verwendeten erfindungsgemäßen Getriebeanordnung mit dem in Figur 1 schematisch dargestellten rotierenden Greifersystem 4 ist die Steuerkurve 7 so ausgebildet, daß sich für einen Neigungswinkel psi des zweiten Getriebeglieds 8 beziehungsweise der Abtriebsschwinge 18 gemäß Fig. 5 unter der bereits erwähnten Bedingung einer betriebsmäßig konstanten Drehzahl des ersten Getriebeglieds 6 insgesamt ein idealisierter qualitativer Verlauf während der Zeit t gemäß Figur 2 ergibt. Der Beginn beziehungsweise das Ende einer jeweiligen Periode - mit der Periodendauer T - sind hierbei willkürlich in das jeweilige Minimum des Neigungswinkel psi gelegt.

Bei der in Figur 1 angegebenen Drehrichtung des ersten Getriebeglieds 6 durchfährt die Tastrolle 9 innerhalb eines jeweiligen Periodenabschnitts T' zunächst den ersten Kontaktpunkt P1 und sodann den zweiten Kontaktpunkt P2. Dabei liegt der erste Kontaktpunkt P1 auf dem bereits erwähnten, eine Rastbahn darstellenden Kurvenabschnitt der Steuerkurve 7 und der zweite Kontaktpunkt P2 an einer Stelle auf der Steuerkurve 7, an welcher die Umfangsgeschwindigkeit eines mittels der Getriebeanordnung angetriebenen Vorgreifers die Umfangsgeschwindigkeit des rotierenden Greifersystems 4 aufweist. Dem eine Rastbahn darstellenden Kurvenabschnitt der Steuerkurve 7 entspricht dabei jeweils ein derartiger Abschnitt des in Figur 2 dargestellten Verlaufs des Neigungswinkels psi , in welchem dieser Neigungswinkel psi konstant ist.

Da die obige Beschreibung insbesondere von einer Ausbildung des zweiten Getriebeglieds 8 als Schwenkarm ausgeht, ist festzuhalten, daß das zweite Getriebeglied 8 im Rahmen der Erfindung auch beispielsweise als Stößel ausgebildet sein kann.

Wie außerdem bereits angedeutet, könnte ein im Sinne eines Rollkontakts mit der Tastrolle 9 aktiver Teil der Steuerkurve 7 auch auf ein Steuersegment beschränkt sein, innerhalb dessen Kontur die beiden Kontaktpunkte P1 und P2 liegen. Bei solcher Ausgestaltung und umlaufender Steuerkurve 7 wäre jedoch zweckmäßigerweise eine Vorkehrung zu treffen, um ein Unterschreiten eines bestimmten Wertes des Neigungswinkels psi zu verhindern und gegebenenfalls das Steuersegment mit wenigstens einem entsprechenden Anlaufbereich zu versehen, auf welchen im Betrieb sodann ein Kontaktpunkt P1 beziehungsweise P2 folgt.

## Patentansprüche

1. Getriebeanordnung mit
a) einer Mehrzahl von Getriebegliedern, von welchen wenigstens eines eine oszillierende Bewegung ausführt, die sich nach Ablauf einer Periode im Verlauf einer jeweils weiteren Periode wiederholt,
b) einer an einem ersten Getriebeglied (6) ausgebildeten Steuerkurve (7),
c) einer an einem zweiten Getriebeglied (8) drehbar gelagerten, ein drittes Getriebeglied darstellenden Tastrolle (9),
d) betriebsmäßigem Rollkontakt zwischen der Steuerkurve (7) und einer Lauffläche (13) der Tastrolle (9) während wenigstens eines sich in jeweiligen Perioden wiederholenden Periodenabschnitts (T'),
e) einer das zweite Getriebeglied (8) aufnehmenden Lagerung (11), wobei das zweite Getriebeglied (8) gegenüber der Lagerung (11) einen Freiheitsgrad für eine Verlagerung des zweiten Getriebeglieds (8) aufgrund von Auslenkungen der am zweiten Getriebeglied (8) gelagerten Tastrolle (9) infolge einer Relativbewegung zwischen der Steuerkurve (7) und der Tastrolle (9) aufweist,
f) einer im jeweiligen Periodenabschnitt (T') vom zweiten Getriebeglied (8) eingenommenen ersten Funktionsstellung, welche einen auf der Steuerkurve (7) gelegenen ersten Kontaktpunkt (P1) derselben mit der Tastrolle definiert,
g) einer im jeweiligen Periodenabschnitt (T') vom zweiten Getriebeglied (8) eingenommenen zweiten Funktionsstellung, welche einen auf der Steuerkurve (7) gelegenen zweiten Kontaktpunkt (P2) derselben mit der Tastrolle (9) definiert,
**dadurch gekennzeichnet, daß**
h) die beiden Kontaktpunkte (P1, P2) die Tastrolle jeweils im wesentlichen in ein und demselben Punkt ihrer Lauffläche (13) kontaktieren.

2. Getriebenordnung nach Anspruch 1,
**dadurch gekennzeichnet**,
daß die Tastrolle (9) eine Nabe (15), auf der Nabe (15) abrollende Wälzkörper (16) und einen von den Wälzkörpern (16) getragenen Laufring (17) mit einem derartigen Verhältnis des Durchmessers D1 der Wälzkörper (16) zum Durchmesser D2 der Nabe (15) aufweist, daß die Wälzkörper (16) in der zweiten Funktionsstellung zumindest im wesentlichen dieselbe Relativlage gegenüber dem Laufring (17) einnehmen wie in der ersten Funktionsstellung.

3. Getriebenordnung nach Anspruch 1,
**dadurch gekennzeichnet**,
daß
- das zweite Getriebeglied (8) eine Antriebsschwinge eines Übertragungsgetriebes mit einer Abtriebsschwinge (18) ist
und
- zwischen einer ersten Auslenkung eines bezüglich des zweiten Getriebeglieds (8) festen ersten Systempunkts (A1) und einer zweiten Auslenkung eines bezüglich der Abtriebsschwinge (18) festen zweiten Systempunkts (A2) in der ersten und zweiten Funktionsstellung derart unterschiedliche Übersetzungsverhältnisse vorgesehen sind, daß diese einem Einfluß auf die beiden Funktionsstellungen entgegenwirken, der sich bei einem Radialschlag der Tastrolle (9) aus unterschiedlichen zwischen der Steuerkurve (7) und dem zweiten Getriebeglied (8) wirksamen Übertragungswinkeln (µ) ergibt.

4. Getriebeanordnung nach Anspruch 1,
**dadurch gekennzeichnet,**
daß wenigstens einer der beiden Kontaktpunkte (P1, P2), auf einem eine Rastbahn darstellenden Kurvenabschnitt der Steuerkurve (7) liegt.

## Claims

1. Gear arrangement having
a) a plurality of gear elements, of which at least one carries out an oscillating movement which is repeated, after one period has elapsed, in the course of a further period in each case,
b) a control cam (7) formed on a first gear element (6),
c) a scanning roller (9) which is mounted rotatably on a second gear element (8) and constitutes a third gear element,
d) roller contact during operation between the control cam (7) and a running surface (13) of the scanning roller (9) during at least one period phase (T') which is repeated in respective periods,
e) a bearing (11) which holds the second gear element (8), the second gear element (8) having one degree of freedom relative to the bearing (11) for a displacement of the second gear element (8) due to deflections of the scanning roller (9), mounted on the second gear element (8), as a result of a relative movement between the control cam (7) and the scanning roller (9),
f) a first function position which is assumed in the respective period phase (T') by the second gear element (8) and defines a first contact point (P1) of the control cam (7) with the scanning roller located on the latter,
g) a second function position which is assumed in the respective period phase (T') by the second gear element (8) and defines a second contact point (P2) of the control cam (7) with the scanning roller located on the latter,
characterized in that
h) the two contact points (P1, P2) make contact with the scanning roller in each case essentially at one and the same point on its running surface (13).

2. Gear arrangement according to Claim 1, characterized in that the scanning roller (9) has a hub (15), rolling bodies (16) which roll along the hub (15), and a raceway (17), supported by the rolling bodies (16), with such a ratio of the diameter D1 of the rolling bodies (16) to the diameter D2 of the hub (15) that, in the second function position, the rolling bodies (16) assume at least essentially the same relative position relative to the raceway (17) as in the first function position.

3. Gear arrangement according to Claim 1, characterized in that
- the second gear element (8) is a drive rocker of a transmission gear with an output rocker (18),
and
- provision is made for such different transmission ratios between a first deflection of a first system point (A1), which is fixed in relation to the second gear element (8) and a second deflection of a second system point (A2), which is fixed in relation to the output rocker (18), in the first and second function positions that these transmission ratios counteract any influence on the two function positions which results in the case of radial runout of the scanning roller (9) from different transmission angles (µ) being effective between the control cam (7) and the second gear element (8).

4. Gear arrangement according to Claim 1, characterized in that at least one of the two contact points (P1, P2) lies on a curve section of the control cam (7) constituting a dwell path.

## Revendications

1. Mécanisme de transmission comprenant
a) plusieurs organes de transmission dont au moins un exécute un mouvement oscillant qui se répète à la fin d'une période au cours de chaque période ultérieure,
b) une came de commande (7) réalisée sur un premier organe de transmission (6).
c) un galet palpeur (9) monté rotatif sur un deuxième organe de transmission (8) et représentant un troisième organe de transmission,
d) un contact de roulement en service entre la came de commande (7) et une surface de roulement (13) du galet palpeur (9) pendant au moins une partie de période (T') qui se répète au cours de chaque période,
e) un support (11) de montage du deuxième organe de transmission (8). le deuxième organe de transmission (8) ayant par rapport au support (11) un degré de liberté pour un déplacement du deuxième organe de transmission (8) par suite d'excursions du galet palpeur (9) monté sur le deuxième organe de transmission (8) en raison d'un mouvement relatif entre la came de commande (7) et le galet palpeur (9),
f) une première position fonctionnelle qu'occupe le deuxième organe de transmission (8) dans chaque partie de période (T') et qui détermine un premier point de contact (P1) situé sur la came de commande (7) et par lequel celle-ci entre en contact avec le galet palpeur,
g) une seconde position fonctionnelle qu'occupe le deuxième organe de transmission (8) dans chaque partie de période (T') et qui détermine un second point de contact (P2) situé sur la came de commande (7) et auquel cette dernière est en contact avec le galet palpeur (9),
caractérisé en ce que
les deux points de contact (P1, P2) sont en contact avec le galet palpeur en sensiblement un seul et même point de la surface de roulement (13) de ce dernier.

2. Mécanisme de transmission selon la revendication 1,
caractérisé
en ce que le galet palpeur (9) comprend un moyeu (15) des corps de roulement (16) roulant sur le moyeu (15) et une bague de roulement (17) supportée par les corps de roulement (16), avec un rapport tel du diamètre D1 des corps de roulement (16) au diamètre D2 du moyeu (15) que les corps de roulement (16) occupent à la seconde position fonctionnelle au moins sensiblement la même position relative par rapport à la bague de roulement (17) qu'à la première position fonctionnelle.

3. Mécanisme de transmission selon la revendication 1,
caractérisé
en ce que
- le deuxième organe de transmission (8) est une bielle oscillante de commande d'un train de transmission comprenant une bielle oscillante de sortie (18)
et
- des différences de rapport de transmission entre une première excursion d'un premier point fixe d'épure (A1) par rapport au deuxième organe de transmission (8) et une seconde excursion d'un second point fixe d'épure (A2) par rapport à la bielle oscillante de sortie (18) sont prévues à la première et à la seconde positions fonctionnelles de manière telle qu'elles s'opposent à un effet s'exerçant sur les deux positions fonctionnelles et résultant de différences d'angles de transmissions (µ) agissant entre la came de commande (7) et le deuxième organe de transmission (8) en présence d'un battement radial du galet palpeur (9).

4. Mécanisme de transmission selon la revendication 1,
caractérisé
en ce qu'au moins l'un des deux points de contact (P1, P2) est situé sur une partie de courbe de la came de commande (7) qui représente une voie d'encliquetage.
